# EUROPÄISCHE PATENTSCHRIFT

(11) **EP 2 072 468 B1**
(45) Veröffentlichungstag und Bekanntmachung des Hinweises auf die Patenterteilung: **21.03.2012**
(21) Anmeldenummer: 08021997.5
(22) Anmeldetag: 18.12.2008
(51) Int. Cl.: C01G 13/00, C22B 7/00, C22B 43/00, B01J 19/24

(54) **Verfahren und Vorrichtung zur Herstellung von Quecksilbersulfid zur anschließenden Entsorgung**
Method and device for manufacturing mercury sulphide for subsequent disposal
Procédé et dispositif de fabrication de sulfure de mercure en vue du recyclage ultérieur

(30) Priorität: 19.12.2007 DE 102007061791; 25.01.2008 DE 102008006246
(43) Veröffentlichungstag der Anmeldung: 24.06.2009
(73) Patentinhaber: DELA GmbH Recycling und Umwelttechnik, 32549 Bad Oeynhausen (DE)
(72) Erfinder: Bonmann, Christian, 45133 Essen (DE)
(74) Vertreter: Gesthuysen, von Rohr & Eggert

(56) Entgegenhaltungen:
- WO-A1-2006/016076
- DE-B1- 2 305 522
- US-A- 5 034 054

## Beschreibung

Die Erfindung betritt ein Verfahren zur Herstellung von Quecksilbersulfid zur anschließenden Entsorgung, wobei sich das Quecksilbersulfd während eines Reaktiorsvorgangs in einem Reaktor aus einer Reaktion von elementarem Quecksilber und einem elementaren Schwefel und/oder eine Schwefelverbindung enthaltenden Zugabematerial ergibt.

Quecksilber wird aufgrund seiner besonderen physikalischen Eigenschaften in vielen technologischen Anwendungen und in der industriellen Produktion eingesetzt. Hier ist insbesondere die Chloralkalieelektrolyse zur Gewinnung von Chlor zu nennen. Neben einer Vielzahl von positiven Eigenschaften ist Quecksilber aber auch ein giftiger Gefahrstoff, der insbesondere aufgrund seines bereits bei Raumtemperatur vergleichsweise hohen Dampfdrucks eine Gefahr für Mensch und Umwelt darstellt. Zahlreiche Unfälle und nahezu irreversible Umweltschäden in der Vergangenheit haben Quecksilber zu einer zweifelhaften Popularität verholfen.

Vor diesem Hintergrund werden heute in vielen Bereichen Quecksilber oder ganze Produktionsverfahren substituiert, um den Gebrauch von Quecksilber und damit Quecksilberemissionen so weit wie möglich zu reduzieren. Der verringerte Bedarf führt zu einer Reduzierung bis hin zur Einstellung der Produktion von Frimärqueclcsilber an den bekannten Produktionsstätten. Schon seit vielen Jahren wird in Recycling-Anlagen Sekundär-Quecksilber aus Abfällen zurückgewonnen und als Alternative zum Primär-Quecksilber am Markt angeboten. Sehr große Mengen Sekundär-Quecksilber werden zukünftig mit der weltweiten Umstellung bestehender Chlorproduktionen vom Amalgamverfahren zum Membranverfahren freigestellt. Dauerhaft wird es nicht möglich sein, das aus diesen Anlagen freigestellte Quecksilber in anderen umweltgerechten Anwendungen einzusetzen. Vor diesem Hintergrund wird es erforderlich, für elementares Quecksilber eine umweltgerechte, finale Entsorgungsmöglichkeit zur Verfügung zu stellen.

Eine Möglichkeit der Umwandlung von elementarem Quecksilber in eine stabilisierte Quecksilber-Verbindung besteht in der Herstellung von Quecksilbersulfid (Zinnober). Quecksilbersulfid ist eine stabile bzw. stabilisierte Verbindung, die aufgrund ihrer bekannten Eigenschaften (ungiftig, chemisch stabil, und zwar auch unter aggressiven Bedingungen) eine dauerhafte und gefahrlose Lagerung von Quecksilber zuläßt. Im übrigen ist es grundsätzlich auch möglich, Quecksilbersulfid unter Einsatz von Schwefelverbindungen herzustellen.

Aus der US-A-5,034,054 ist bereits ein Verfahren zur Herstellung einer stabilisierten Quecksilberverbindung zur anschließenden Entsorgung bekannt. Dabei wird Quecksilber in Form eines Amalgams in Verbindung mit Kupfer, Zink oder Nickel als Zugabematerial oder aber als Quecksilbersulfid in Verbindung mit Schwefel als Zugabematerial gebunden und anschließend umweltgerecht entsorgt. Bei dem bekannten Verfahren wird das Zugabematerial mit dem Quecksilber in einem stöchiometrischen Verhältnis von wenigstens 1:1 und bevorzugt 3:1 zugegeben. Der Mischvorgang wird dabei in einer Mischeinrichtung bei Raumtemperatur und Umgebungsdruck bei diskontinuierlicher Beschickung der Mischeinrichtung durchgeführt. Von Nachteil bei dem bekannten Verfahren ist, daß das Zugabematerial in einem stark überstöchiometrischen Verhältnis zum Quecksilber zugegeben werden muß, um eine hinreichende Reaktion des Quecksilbers zu der Quecksilberverbindung zu gewährleisten. Ein weiterer Nachteil des bekannten Verfahrens besteht darin, daß im Hinblick auf den starken überstöchiometrischen Überschuß des Zugabematerials, das in Pulverform zugegeben wird, bei dem Mischprozeß Aerosole, das heißt kleinste in der Luft sedimentierende Zugabematerialpartikel entstehen können. Der chargenweise Betrieb der Mischeinrichtung führt bei dem bekannten Verfahren zu hohen Kosten und vergleichsweise geringen Produktionsmengen von Quecksilbersulfid.

Aus der GB 404 886 A ist bereits ein Verfahren zur Herstellung von ZnS bekannt, wobei direkt die Elemente miteinander in der Gasphase reagieren. Die auf diese Weise hergestellten Partikel werden anschließend als Pigmente eingesetzt. Aus der Veröffentlichung "Gmelins Handbuch der anorganischen Chemie, 8., Auflage: Quecksilber (II)-Sulfid HgS, 1968, Chemieverlag, Bd, 34, Seiten 954 ff" ist bekannt, dass das aus der GB 404 886 A bekannte Verfahren auch zur Herstellung von HgS eingesetzt werden kann.

Aufgabe der vorliegenden Erfindung ist es nun, ein Verfahren der eingangs genannten Art zur Verfugung zu stellen, mit dem Quecksilbersulfid in einfacher und kostengünstiger Weise und möglichst ohne Umweltbelastung hergestellt werden kann.

Diese Aufgabe ist bei einem Verfahren der eingangs genannten Art mit den Merkmalen des Anspruchs 1 gelöst. Dabei wird der Reaktor kontinuierlich mit dem Quecksilber und dem Zugabematerial beschickt, wobei das Quecksilber und das Zugabematerial im Reaktor erwärmt und in einen gasförmigen Zustand überführt werden, wobei die Reaktion zwischen dem Quecksilber und dem Zugabermaterial in der Gasphase erfolgt und wobei die Reaktion im Reaktor bei Unterdruck durchgeführt wird.

Die Erfindung betrifft ein kontinuierliches Verfahren zur Immobilisierung von Quecksilber durch Reaktion mit Schwefel zu Quecksilbersulfid, wobei Quecksilber und Schwefel mittels einer geeigneten Apparatur kontinuierlich in die Gasphase überführt werden und eine kontinuierliche Gasphasenreaktion zwischen Quecksilber und Schwefel erreicht wird. Die kontinuierliche Herstellung von Quecksilbersulfd führt im Vergleich zu dem aus der US-A-5,034,054 bekannten Verfahren zu einer Kosteneinsparung und zu einer Verfahrensvereinfachung. Dabei ist das erfindungsgemäße Verfahren vorzugsweise derart ausgelegt, daß das hergestellte Quecksilbersulfid den Anforderungen für eine nachfolgende Entsorgung, vorzugsweise für eine Entsorgung Untertage, entspricht.

Im Zusammenhang mit der Erfindung ist erkannt worden, daß die stark überstöchiometrische Zugabe des Zugabematerials entsprechend der US-A-5,034,054 deshalb erforderlich ist, da die Reaktion des Schwefels mit dem Quecksilber immer nur an der Oberfläche der im festen Zustand vorliegenden Schwefelpartikel erfolgen kann. Um eine vollständige Reaktion des Schwefels mit dem Quecksilber zu ermöglichen, ist bei dieser bekannten Fest-Flüssig-Reaktion ein hoher Überschuß des Schwefels notwendig. Bei dem erfindungsgemäßen Verfahren werden dagegen das Quecksilber und das Zugabematerial im Reaktor in den gasförmigen Zustand überführt, wobei beide Reaktionskomponenten im gasförmigen Zustand miteinander reagieren. Dadurch wird die Reaktivität des Quecksilbers stark erhöht und die Bildung von Quecksilbersulfid erleichtert.

Im Zusammenhang mit der kontinuierlichen Herstellung von Quecksilbersulfid ist weiter vorgesehen, daß das bei der Reaktion im Reaktor erhältliche Quecksilbersulfid kontinuierlich dampfförmig aus dem Reaktor abgeführt wird. Die Betriebstemperatur in dem Reaktor liegt dabei vorzugsweise oberhalb von der Siedetemperatur von Quecksilbersulfid bzw. oberhalb der Verdampfungstemperatur, damit das gebildete Quecksilbersulfid nicht innerhalb von dem Reaktor kondensiert bzw. resublimiert. Die Betriebstemperatur im Reaktor sollte daher vorzugsweise oberhalb von ca. 580° liegen, kann jedoch auch höher gewählt sein, um eine Kondensation bzw. Resublimation von Quecksilbersulfid sicher ausschließen zu können. Sofern der Reaktor bei Unterdruck betrieben wird, kann die Betriebstemperatur auch entsprechend verringert werden.

Der Betrieb des Reaktors bei Temperaturen im Bereich oberhalb von der Siedetemperatur von Quecksilbersulfid führt im übrigen dazu, daß die Einsatzstoffe nach dem Eintrag in den Reaktor sehr schnell in die gasförmige Phase überführt werden. Dadurch läßt sich die nötige Verweilzeit im Reaktor entsprechend verringern und die Produktionsmenge von Quecksilbersulfid entsprechend steigern.

Der Reaktor kann mit einem vorzugsweise homogenisierten Gemisch aus flüssigem Quecksilber und pulverförmigen Zugabematerial beschickt werden. Dies ermöglicht eine verfahrenstechnisch einfache kontinuierliche Beschi kung des Reaktors mit den Ausgangsstoffen, Es versteht, daß eine Beschi kungseinrichtung vorgesehen sein muß, die für die kontinuierliche Beschi kung des Reaktors mit dem homogenisierten Gemisch ausgebildet ist. Grundsätzlich kann auch eine Dosieranlage vorgesehen sein, wobei Quecksilber und Zugabematerial dem Reaktor aus Vorlagebehältern im gewünschten Mischungsverhältnis getrennt zugeführt werden.

Insbesondere bei Durchführung des erfindungsgemäßen Verfahrens im zuvor genannten Temperaturbereich und/oder im Unterdruckbetrieb ist es möglich, die Ausgangs- bzw. Einsatzstoffe in dem stöchiometrischen oder einem gering überstöchiometrischen Verhältnis zuzugeben. Das stöchiometrische Verhältnis von elementarem Schwefel zu Quecksilber liegt bei 0,16:1. Bei einem solchen Verhältnis liegt eine ideale Umsetzung der Einsatzstoffe zu Quecksilbersulfid vor. Bei nicht vollständiger Umsetzung liegt der obere Grenzwert bei 0,5:1 1 und damit noch immer 100 % unterhalb der unteren Grenze des Mischungsverhältnisses, das in der US-A-5,034,054 genannt ist. Bevorzugt liegt das Verhältnis zwischen elementarem Schwefel und Quecksilber zwischen 0,18:1 1 bis 0,32:1 und insbesondere zwischen 0,19:1 und 0,23 :1.

Die Auslegung des Reaktors und die Stoffinengeströme sollten so gewählt sein, daß die rechnerische Verweilzeit von Quecksilber und Zug$ber,naterial im Reaktor wenigstens eine Sekunde bis 6 Sekunden, vorzugsweise weniger als vier Sekunden, beträgt. Dadurch ist ein ausreichender Umsatz bei der Gasphasenreaktion zwischen dem Quecksilber und dem Zugabematerial sichergestellt.

Vorzugsweise wird der Reaktor und auch die weiteren an der Herstellung von Quecksilbersulfid beteiligten Einrichtungen bei der erfindungsgemäßen Vorrichtung gasdicht betrieben, damit es bei der kontinuierlichen Herstellung von Quecksilbersulfid nicht zu einem Entweichen von Quecksilbersulfid in die Umgebung kommen kann. Dadurch ist eine umweltgerechte Erzeugung von Quecksilbersulfid aus den Einsatzstoffen möglich.

Der Reaktor kann über eine Vakuumpumpe oder ein Vakuumgebläse mit einem geringen Unterdruck beaufschlagt werden, um der Betriebssicherheit zu genügen und das Austreten von Quecksilbersulfid aus dem Reaktor ausschließen zu können. Es versteht sich, daß der Betrieb unter geringem Unterdruck alle Einrichtungen der erfmdungsgemäßen Vorrichtung betrifft, die von gasförmigem Quecksilbersulfid durchströmt werden.

Unterdruck im Sinne der Erfindung bezeichnet jeden Druck unterhalb des Umgebungsdruckes bis hin zum Vakuum. Ausreichend sind bereits geringe Unterdrücke von 0,05 bar, was bei einem Umgebungsdruck von 1 bar absoluten Drücken von 0,95 bar entspricht. Die Durchführung der Gasphasenreaktion im Unterdruck bewirkt, daß der Siedepunkt des Quecksilbers entsprechend sinkt und schon bei geringeren Temperaturen eine hohe Konzentration von Quecksilber in gasförmiger Form im Reaktor erreicht wird, wodurch eine hohe Umsatzrate bei geringerem Energieaufwand gewährleistet wird.

Weiter ist bei dem erfindungsgemäßen Verfahren vorgesehen, daß das dampfförmige Quecksilbersulfid nach dem Abführen aus dem Reaktor mit einem flüssigen oder dampfförmigen Kühlmedium schlagartig zumindest bis zum Erreichen eines festen Zustands, vorzugsweise bis auf eine Temperatur von weniger als 50 °C, abgekühlt und zusammen mit dem Kühlmedium einer Fest-Flüssig-Trennung unterzogen wird. Bei dem Kühlmedium kann es sich um Wasser handeln, wobei zur Abkühlung des Quecksilbersulfids ein Quench und/oder eine Wasserstrahlpumpe vorgesehen sein können. Damit es nicht zu einer ungewollten Kondensation bzw. Resublimation von Quecksilbersulhd vor der schlagartigen Abkühlung kommt, kann eine beheizbare Leitung für das Quecksilbersulfid zwischen dem Reaktor und dem Quench und/oder der Wasserstrahlpumpe vorgesehen sein. Mit Betrieb des Quenchs oder der Wasserstrahlpumpe stellt sich im Regelbetrieb ein ausreichendes Druckgefälle zum Reaktor ein, so daß die Möglichkeit besteht, die Anlage ohne Vakuumpumpe oder Vakuumgebläse bei geringem Unterdruck zu betreiben, ohne daß ein Entweichen von Quecksilbersulfid in die Umgebung befürchtet werden muß.

Der Quench oder die Wasserstrahlpumpe können mit gekühltem Wasser gespeist werden, was zu einer schlagartigen Abkühlung des dampfförmigen Quecksilbersulfids führt, das nachfolgend zusammen mit dem Wasser einer Fest-Flüssig-Trennstufe zugeführt wird, um das abgekühlte Quecksilbersulfid von dem Kühlmedium abzutrennen. Das Kühlmedium kann im Kreislauf geführt sein, was zu einer Einsparung von Betriebskosten führt.

Die Fest-Flüssig-Trennung von festem Quecksilbersulfid und flüssigem Kühlmedium kann durch Schwerlcraftabscheidung in einem Sedimentationsbecken und/oder durch Fliehkranabscheidung in einer Zentrifuge erfolgen. Die hohe Dichte von Quecksilbersulfid von 8,1 g/cm³ ermöglicht dabei eine einfache und kostengünstige Abtrennung von Quecksilbersulfid aus dem Kühl- bzw. Waschwasser. Das so erhaltene feste Quecksilbersulfid kann im Anschluß an die Fest-Flüssig-Trennung gepreßt und ggf. getrocknet werden. In diesem Zusammenhang kann eine Preßeinrichtung, vorzugsweise eine Filterpresse, vorgesehen sein, wobei der so erhältliche Filterkuchen aus Quecksilbersulfid im Anschluß in einem Vakuummischer und/oder einem Trockenofen getrocknet werden kann.

Es wird ausdrücklich darauf hingewiesen, daß alle vorstehend genannten und in den Patentansprüchen angegebenen Bereichsangaben sämtliche, innerhalb des betreffenden Bereichs liegende Zwischeninterrralle und Einzelwerte einschließlich etwaiger Dezimalstellen umfassen, auch wenn diese Zwischenintervalle und Einzelwerte im einzelnen nicht angegeben sind.

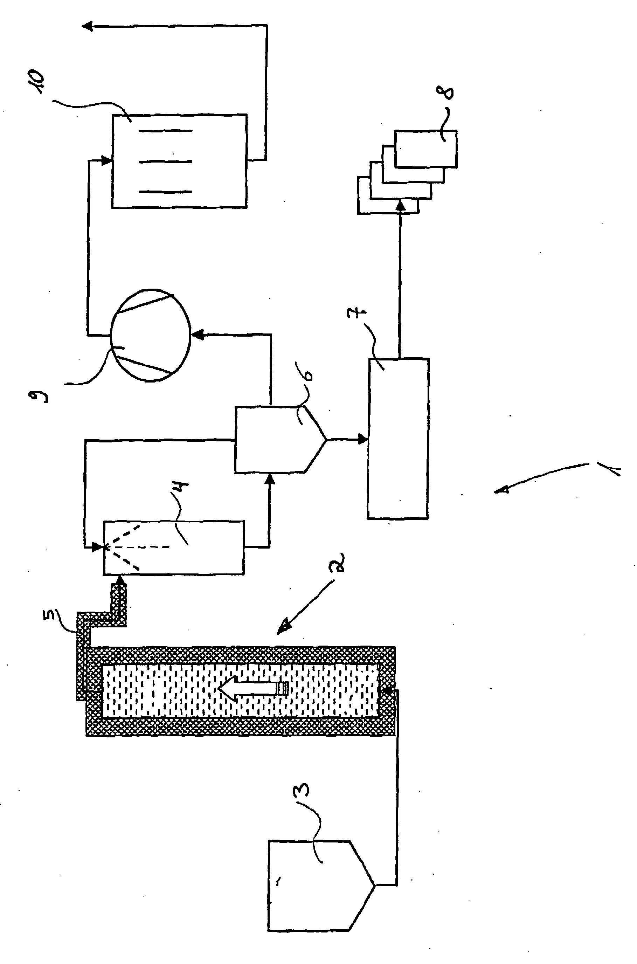

Die einzige Figur zeigt eine schematische Darstellung einer Vorrichtung zur Herstellung von Quecksilbersulfid zur anschließenden Entsorgung. Anhand der Zeichnung wird nachfolgend auch das erfindungsgemäße Verfahren beschrieben. Allerdings wird darauf hingewiesen, daß die Erfindung nicht auf die dargestellte Ausführungsform beschränkt ist.

In der einzigen Figur ist eine Vorrichtung 1 zur Herstellung von Queclcsilbersulfid (HgS) aus elementarem Quecksilber (Hg) und elementarem Schwefel (S) zur finalen umweltgerechten Entsorgung dargestellt. Bei dem Quecksilber handelt es sich vorzugsweise um Sekundär-Quecksilber. Die Vorrichtung 1 weist einen Reaktor 2 auf, der als aufrecht stehender Rohrreaktor ausgebildet und indirekt beheizbar ist und der zur Überführung von elementarem Quecksilber und einem elementaren Schwefel und/oder eine Schwefelverbindung enthaltenden Zugabematerial in den gasförmigen Zustand ausgebildet ist. Nicht im einzelnen dargestellt ist, daß der Reaktor 2 eine Beschickungseinrichtung aufweist, die eine kontinuierliche Beschickung des Reaktors 2 mit dem Quecksilber und dem Zugabematerial aus einem Vorlagebehälter 3 ermöglicht. Der Vorlagebehälter 3 enthält ein vorher vermischtes und weitgehend homogenisiertes Gemisch von Schwefel und Quecksilber.

In dem Reaktor 2 wird bei einer Betriebstemperatur, die oberhalb von der Siede- bzw. Verdampfungstemperatur von Quecksilbersulfid liegt, das kontinuierlich dem Reaktor 2 zugeführt Ausgangsgemisch aus Quecksilber und elementarem Schwefel in den gasförmigen Zustand überführt. Daran schließt sich eine kontinuierlich ablaufende Gasphasenreaktion zwischen den im gasförmigen Zustand vorliegenden Einsatzstoffen an, wobei das so erhältliche dampfförmige Quecksilbersulfid bei einer rechnerischen Verweilzeit der Einsatzstoffe im Reaktor 2 von mehr als einer Sekunde bis vorzugsweise weniger als vier Sekunden kontinuierlich aus dem Reaktor 2 abgeführt und einem Quench 4 zugeführt wird. Eine exemplarisch dargestellte Leitung 5 zwischen dem Reaktor 2 und dem Quench 4 ist beheizbar, um das Kondensieren bzw. Resublimieren von Quecksilbersulfid in der Leitung 5 zu verhindern.

Bei der Gasphasenreaktion im Reaktor 2 wird rotes kristallines Quecksilbersulfid erhalten. Rotes Quecksilbersulfid ist in Wasser, Säuren (Ausnahme Königswasser) und Laugen unlöslich, stabil und ungiftig. Daher ist rotes Quecksilbersulfid für die dauerhafte Entsorgung geeignet.

Der Quench 4 wird mit im Kreislauf geführtem Kühlwasser gespeist, so daß es im Quench 4 zu einem schlagartigen Abkühlen des Quecksilbersulfides bis in den Bereich der Festphase von Quecksilbersulfid kommt. Vorzugsweise wird das Quecksilbersulfid auf eine Temperatur zwischen 25 °C und 50 °C abgekühlt. Anschließend wird das so erhaltene feste Quecksilbersulfid zusammen mit dem Kühlwasser einer Fest-Flüssig-Trennstufe zugeführt, wobei in einer Zentrifuge 6 das feste Quecksilbersulfid von dem flüssigen Kühlwasser abgetrennt wird. Das Kühlwasser wird anschließend zum Quench 4 zurückgeführt, wobei eine zwischengeschaltete Kühlung des Kühlwassers vorgesehen sein kann.

Im Anschluß an die Fest-Flüssig-Trennung wird das Quecksilbersulfid einer Filterpresse 7 zugeführt. Der so erzeugte Filterkuchen kann im Anschluß in einer nicht im einzelnen dargestellten Trocknungseinrichtung getrocknet werden und wird dann in zur Endlagerung vorgesehene Lagergebinde 8 eingefüllt.

Im übrigen ist eine Vakuumpumpe 9 vorgesehen, um dampfförmige Quecksilbersulfidanteile zu erfassen und einem Aktivkohlefilter 10 zuzuführen. Der den Aktivkohlefilter 10 passierende Gasstrom kann danach in die Umgebung abgeleitet werden.

### Bezugszeichenliste

- 1: Vorrichtung
- 2: Reaktor
- 3: Vorlagebehälter
- 4: Quench
- 5: Leitung
- 6: Zentrifuge
- 7: Filterpresse
- 8: Lagergebinde
- 9: Vakuumpumpe
- 10: Aktivkohlefilter

## Patentansprüche

1. Verfahren zur Herstellung von Quecksilbersulfid zur anschließenden Entsorgung, wobei sich das Queclcsilbersulfid während eines Reaktionsvorgangs in einem Reaktor (2) aus einer Reaktion von elementarem Quecksilber mit einem elementaren Schwefel und/oder eine Schwefelverbindung enthaltenden Zugabematerial ergibt, wobei der Reaktor (2) kontinuierlich mit dem Quecksilber und dem Zugabematerial beschickt wird, wobei das Quecksilber und das Zugabematerial im Reaktor (2) erwärmt und in einen gasförmigen Zustand überführt werden, wobei die Reaktion zwischen dem Quecksilber und dem Zugabematerial in der Gasphase erfolgt und wobei die Reaktion im Reaktor (2) bei Unterdruck bis hin zum Vakuum, minimal 0,05 bar unterhalb des Umgebungsdruckes durchgeführt wird.

2. Verfahren nach Anspruch 1, **dadurch gekennzeichnet, daß** das bei der Reaktion im Reaktor (2) erhältliche Quecksilbersulfid kontinuierlich dampfförmig aus dem Reaktor (2) abgefühlt wird.

3. Verfahren nach Anspruch 1 oder 2, **dadurch gekennzeichnet, daß** der Reaktor (2) bei einer Betriebstemperatur oberhalb von der Siedetemperatur von Quecksilbersulfid betrieben wird, insbesondere bei einer Betriebstemperatur oberhalb von größer als 500 °C, weiter insbesondere oberhalb von 580 °C.

4. Verfahren nach einem der vorhergehenden Ansprüche, **dadurch gekennzeichnet, daß** der Reaktor (2) mit einem vorzugsweise homogenisierten Gemisch aus Quecksilber und Zugabematerial beschickt wird.

5. Verfahren nach einem der vorhergehenden Anspruch, **dadurch gekennzeichnet, daß** das Zugabematerial und das Quecksilber in einem stöchiometrischen oder einem geringfügig überstöchiometrischen Verhältnis, vorzugsweise in einem stöchiometrischen Verhältnis zwischen 0,16:1 bis 0,5:1, insbesondere zwischen 0,18:1 bis 0,32:1 und besonders bevorzugt zwischen 0,19:1 und 0,23 ;1 dem Reaktor (2) zugeführt werden.

6. Verfahren nach einem der vorhergehenden Ansprüche, **dadurch gekennzeichnet daß** die rechnerische Verweilzeit des Quecksilbers und des Zugabemateriales im Reaktor (2) wenigstens 1 s beträgt, vorzugsweise zwischen 1 bis 6 s, weiter vorzugsweise weniger als 4 s.

7. Verfahren nach einem der vorhergehenden Ansprüche, **dadurch gekennzeichnet, daß** der Reaktor (2) gasdicht betrieben wird.

8. Verfahren nach einem der vorhergehenden Ansprüche, **dadurch gekennzeichnet, daß** das Quecksilbersulfid nach dem Abführen aus dem Reaktor (2) mit einem flüssigen Kühlmedium schlagartig zumindest bis zum Erreichen eines festen Zustands, vorzugsweise bis auf eine Temperatur von weniger als 50 °C, abgekühlt wird.

9. Verfahren nach einem der vorhergehenden Ansprüche, **dadurch gekennzeichnet, daß** das abgekühlte Quecksilbersulfid durch Fest-Flüssigtrennung von dem insbesondere im Kreislauf geführten Kühlmedium abgetrennt wird.

10. Verfahren nach einem der vorhergehenden Ansprüche, **dadurch gekennzeichnet, daß** die Fest-Flüssigtrennung durch Schwerkraftabscheidung und/oder Fliehkraftabscheidung erfolgt und daß, vorzugsweise, das Quecksilbersulfid nach der Fest-Flüssigtrennung gepreßt und gegebenenfalls getrocknet wird.

## Claims

1. A method for producing mercury sulfide for subsequent disposal, wherein the mercury sulfide results from a reaction of elemental mercury with an elemental sulfur and/or an additive material containing a sulfur compound during a reaction process inside a reactor (2), the reactor (2) being continuously charged with the mercury and the additive material, the mercury and the additive material being heated inside the reactor (2) and converted into a gaseous state, the reaction between the mercury and the additive material occurring in the gaseous phase, and the reaction being performed inside the reactor (2) at low pressure up to vacuum, minimally at 0.05 bar below ambient pressure.

2. The method according to claim 1, **characterized in that** the mercury sulfide which can be obtained in the reaction inside the reactor (2) is continuously discharged from the reactor (2) as vapor.

3. The method according to claim 1 or 2, **characterized in that** the reactor (2) is operated at an operating temperature above the temperature of ebullition of mercury sulfide, in particular at an operating temperature above greater than 500 °C, further in particular above 580 °C.

4. The method according to any of the preceding claims, **characterized in that** the reactor (2) is charged with a preferably homogenized mixture of mercury and additive material.

5. The method according to any of the preceding claims, **characterized in that** the additive material and the mercury are supplied to the reactor (2) in a stoichiometric or slightly super-stoichiometric ratio, preferably in a stoichiometric ratio between 0.16:1 to 0.5:1, in particular between 0.18:1 to 0.32:1, and more preferably between 0.19:1 and 0.23:1.

6. The method according to any of the preceding claims, **characterized in that** the calculated dwell time of the mercury and the additive material inside the reactor (2) is at least 1 s, preferably between 1 to 6 s, more preferably less than 4 s.

7. The method according to any of the preceding claims, **characterized in that** the reactor (2) is operated in a gas-tight manner.

8. The method according to any of the preceding claims, **characterized in that** the mercury sulfide, after having been discharged from the reactor (2), is cooled abruptly by a liquid coolant at least until it reaches a solid state, preferably to a temperature of less than 50 °C.

9. The method according to any of the preceding claims, **characterized in that** the cooled mercury sulfide is separated by solid-liquid-separation from the coolant which is in particular carried in the circuit.

10. The method according to any of the preceding claims, **characterized in that** the solid-liquid-separation is performed by inertial precipitation and/or centrifugal precipitation, and that preferably after solid-liquid-separation mercury sulfide is compressed and possibly dried.

## Revendications

1. Procédé de production de sulfure de mercure en vue d'une élimination consécutive, dans lequel pendant un processus de réaction à l'intérieur d'un réacteur (2), le sulfure de mercure est le résultat d'une réaction d'un mercure élémentaire avec un soufre élémentaire et/ou un additif contenant un composé de soufre, le réacteur (2) étant en continu chargé avec le mercure et l'additif, le mercure et l'additif étant chauffés à l'intérieur du réacteur (2) et convertis à l'état gazeux, la réaction entre le mercure et l'additif survenant en phase gazeuse, et la réaction étant effectuée à l'intérieur du réacteur (2) à basse pression allant jusqu'au vide, au minimum à 0,05 bar sous la pression ambiante.

2. Procédé selon la revendication 1, **caractérisé en ce que** le sulfure de mercure qui peut être obtenu par la réaction à l'intérieur du réacteur (2) est en continu retiré du réacteur (2) sous forme de vapeur.

3. Procédé selon la revendication 1 ou 2, **caractérisé en ce que** le réacteur (2) est exploité à une température de service supérieure à la température d'ébullition du sulfure de mercure, en particulier à une température de service supérieure à 500 °C, plus particulièrement supérieure à 580 °C.

4. Procédé selon l'une quelconque des revendications précédentes, **caractérisé en ce que** le réacteur (2) est chargé avec un mélange de préférence homogénéisé de mercure et d'additif.

5. Procédé selon l'une quelconque des revendications précédentes, **caractérisé en ce que** l'additif et le mercure sont amenés au réacteur (2) dans un rapport stoechiométrique ou légèrement sur-stoechiométrique, de préférence dans un rapport stoechiométrique entre 0,16:1 à 0,5:1, en particulier entre 0,18:1 à 0,32:1, et de plus grande préférence entre 0,19:1 et 0,23:1.

6. Procédé selon l'une quelconque des revendications précédentes, **caractérisé en ce que** le temps de séjours calculé du mercure et de l'additif à l'intérieur du réacteur (2) est d'au moins 1 s, de préférence entre 1 à 6 s, de plus grande préférence inférieur à 4 s.

7. Procédé selon l'une quelconque des revendications précédentes, **caractérisé en ce que** le réacteur (2) est exploité de manière étanche au gaz.

8. Procédé selon l'une quelconque des revendications précédentes, **caractérisé en ce que** le sulfure de mercure, après évacuation du réacteur (2), est refroidi brusquement par un agent réfrigérant liquide au moins jusqu'à atteindre un état solide, de préférence jusqu'à une température inférieure à 50 °C,

9. Procédé selon l'une quelconque des revendications précédentes, **caractérisé en ce que** le sulfure de mercure refroidi est séparé par séparation solide/liquide de l'agent réfrigérant qui est en particulier transporté à l'intérieur du circuit.

10. Procédé selon l'une quelconque des revendications précédentes, **caractérisé en ce que** la séparation solide/liquide est effectuée par précipitation inertielle et/ou précipitation centrifuge, et **en ce que** de préférence après la séparation solide/liquide, le sulfure de mercure est comprimé et le cas échéant séché.
